# EUROPEAN PATENT APPLICATION

(11) **EP 3 461 029 A1**
(43) Date of publication of application: **27.03.2019**
(21) Application number: 16905786.6
(22) Date of filing: 21.06.2016
(51) Int. Cl.: H04B 7/14

(54) **COMMUNICATION METHOD AND DEVICE**

(71) Applicant: Huawei Technologies Co., Ltd., Longgang District Shenzhen, Guangdong 518129 (CN)
(72) Inventor: ZHANG, Xiangdong, Shenzhen Guangdong 518129 (CN); FENG, Shulan, Shenzhen Guangdong 518129 (CN)
(74) Representative: Epping - Hermann - Fischer
(86) International application number: PCT/CN2016/086582
(87) International publication number: WO 2017/219244

(57) **Abstract**

Embodiments of the present invention relate to a communication method and device. The method includes: determining, by a first device, first information, where the first information includes link status information of the first device and/or link requirement information of the first device, and the first device is first user equipment; and sending, by the first user equipment, a first message to a second device, where the first message carries the first information, and the first message is used to instruct the second device to establish a connection for the first device based on the first message. The second device may include either or both of second user equipment and a first network device. According to the embodiments of the present invention, a connection can be established more appropriately for user equipment based on link status information and/or link requirement information of the user equipment.

## Description

### TECHNICAL FIELD

The present invention relates to the field of communications technologies, and in particular, to a communication method and device.

### BACKGROUND

With continuous development of science and technology, users have an increasingly high requirement on experience such as a communication rate. Dual connectivity communication is considered as an important means that can be used to effectively improve the communication rate.

In the prior-art communications technology, user equipment not only needs to connect to a macro base station (Macro evolved NodeB, MeNB) that is mainly responsible for serving the user equipment, but also needs to connect to a small cell (Small eNB, SeNB) that is configured to assist the macro base station in serving the user equipment. Therefore, if the prior-art dual connectivity technology is used to improve service experience of the user equipment, for example, to increase an attainable data rate, an additional small cell needs to be deployed. This greatly increases operators' deployment costs, and makes operators less motivated to deploy the small cell. If the small cell is not deployed, the dual connectivity technology cannot be implemented to improve the service experience of the user equipment.

### SUMMARY

Embodiments of the present invention provide a communication method and device. According to the embodiments of the present invention, a connection can be established for a communications device more appropriately, so as to improve a communication rate and reduce network deployment costs.

According to a first aspect, an embodiment of the present invention provides a communication method. The method includes: determining, by a first device, first information, where the first information includes link status information of the first device and/or link requirement information of the first device, and the first device is first user equipment; and sending, by the first device, a first message to a second device, where the first message carries the first information, and the first message is used to instruct the second device to establish a connection for the first device based on the first message. The second device may include either or both of second user equipment and a first network device. In addition, the link status information of the first device may be used to indicate characteristic information of a status of an established communication connection of the first device. The link requirement information of the first device may be used to indicate a requirement of the first device for the second device that serves the first device. According to this embodiment of the present invention, a connection can be established for user equipment based on link status information and/or link requirement information of the user equipment, so that the connection can be established more appropriately. Particularly, when one or more communication connections have been established between the user equipment and a network device, a communication rate can be improved effectively. In addition, user equipment with a relay capability can be used as the second device to reduce network deployment costs.

In a possible design, the link requirement information of the first device may be determined according to a requirement of a running application of the first device on a network rate. A connection established according to this embodiment of the present invention can improve a rate more effectively and targetedly, thereby improving user experience.

In another possible design, sending, by the first device, the first message to the second user equipment includes: sending, by the first device, the first message by using a PC5 interface.

In still another possible design, sending, by the first device, the first message to a network device includes: sending, by the first device, the first message to the network device directly; or sending, by the first device, the first message to the network device by using user equipment other than the first device.

In yet another possible design, the first message is used to instruct the second device to establish a connection for the first device based on the first message. The connection that the first message may be used to instruct the second device to establish for the first device based on the first message includes: a connection between the second user equipment and the first device and a connection between the second user equipment and the first network device; or when the second user equipment has a connection between the second user equipment and the first network device, the connection that the first message is used to instruct the second device to establish for the first device based on the first message includes a connection between the second user equipment and the first device; or when the first device has a connection between the first device and the second user equipment, the connection that the first message is used to instruct the second device to establish for the first device based on the first message includes a connection between the second user equipment and the first network device; or the connection that the first message is used to instruct the second device to establish for the first device based on the first message includes a connection between the second user equipment and the first device. According to this embodiment of the present invention, the second user equipment can serve as a relay to establish a connection between the first device and a network device, so that a network communication rate can be improved effectively.

In yet another possible design, the first device has a connection to a second network device, and the method further includes: determining, by the first device, information about the second user equipment and information about the first network device; and sending, by the first device, the information about the second user equipment and the information about the first network device to the second network device, so that the second network device instructs the first network device to allocate a resource for communication between the second user equipment and the first device to the second user equipment, or the second network device allocates a resource for communication between the second user equipment and the first device to the first device based on the information about the first network device and/or the information about the second user equipment. According to this embodiment of the present invention, network devices can negotiate resource allocation for user equipment, so that resource configuration is more appropriate and a possibility of conflict is reduced.

In yet another possible design, the second network device and the first network device exchange the resource to be allocated by the second network device to the first device and the resource to be allocated by the first network device to the second user equipment. According to this embodiment of the present invention, network devices can negotiate resource allocation for user equipment, so that resource configuration is more appropriate and a possibility of conflict is reduced.

In yet another possible design, before the sending, by the first device, a first message to a second device, the method further includes: receiving, by the first device, a second message sent by the second device, where the second message carries second information, and the second information includes a user equipment link status and/or link requirement supported by the second device, or a user equipment link status and/or link requirement not supported by the second device.

In yet another possible design, the sending, by the first device, a first message to a second device is specifically: when the first device determines, based on the second message, that the second device is capable of serving the first device, sending, by the first device, the first message to the second device.

According to a second aspect, an embodiment of the present invention provides a communication method. The method includes: receiving, by a second device, a first message sent by a first device, where the first message carries first information, the first information includes link status information and/or link requirement information of the first device, and the first message is used to instruct second user equipment to establish a connection for the first device based on the first message; and when the second device determines, based on the first information, that a capability of the second device meets a requirement of the first device, establish a connection to serve the first device. The second device may include either or both of the second user equipment and a first network device. In addition, the link status information of the first device may be used to indicate characteristic information of a status of an established communication connection of the first device. The link requirement information of the first device may be used to indicate a requirement of the first device for the second device that serves the first device.

In a possible design, the second device may determine a requirement degree of the first device for an established link based on the first information.

In another possible design, when the second device establishes a connection to serve the first device, the second device may establish a connection for a first device with a highest requirement degree for a new link, to serve the first device; or may break, based on the requirement degree of the first device for the established link, a connection corresponding to a link that has been established but is not highly required, and establish a connection for a first device with a high requirement degree for a new link, to serve the first device, so that more resources are determined to serve UE that has a high requirement degree for a new link.

In a possible design, the method further includes: receiving, by the second user equipment, a second message sent by the first network device, where the second message carries second information, and the second information includes a user equipment link status and/or link requirement supported by the first network device, or a user equipment link status and/or link requirement not supported by the first network device; and when the first network device is capable of serving the first device, and a capability of the second user equipment meets the requirement of the first device, establishing, by the second user equipment, a connection to serve the first device.

In yet another possible design, the method further includes: sending, by the second user equipment, a request message to the first network device, where the request message is used to request the user equipment link status and/or link requirement supported by the first network device, or the user equipment link status and/or link requirement not supported by the first network device.

In yet another possible design, the request message carries the first information.

In yet another possible design, establishing, by the second device, the connection based on the first message includes: establishing, by the first network device, a connection between the second user equipment and the first device and a connection between the second user equipment and the first network device for the first device based on the first message; or when the second user equipment has a connection between the second user equipment and the first network device, establishing, by the first network device, a connection between the second user equipment and the first device for the first device based on the first message; or when the first device has a connection to the second user equipment, establishing, by the first network device, a connection between the second user equipment and first network device for the first device based on the first message; or establishing, by the first network device, a connection between the second user equipment and the first device for the first device based on the first message.

In yet another possible design, the first device has a connection to a second network device, and the method further includes: receiving, by the first network device, an instruction message sent by the second network device, where the instruction message is used to instruct the first network device to allocate a resource for communication between the second user equipment and the first device to the second user equipment; and allocating, by the first network device based on the instruction message, the resource for communication between the second user equipment and the first device to the second user equipment.

In yet another possible design, the first device has a connection to a second network device, and the method further includes: sending, by the first network device to the second network device, information about a resource that is allocated by the first network device to the second user equipment, so that the second network device allocates a resource to the first device based on the information about the resource that is allocated by the first network device to the second user equipment.

According to a third aspect, an embodiment of the present invention provides a communication method. The method includes: receiving, by a first device, a third message sent by at least one second device, where the third message carries second information, the second information includes user equipment indication information supported by the second device, and the indication information includes a supported user equipment link status and/or link requirement, or an unsupported user equipment link status and/or link requirement; selecting, by the first device, one of the at least one second device based on the second information; and sending, by the first device, a connection establishment request message to the selected second device, where the connection establishment request message is used to instruct the selected second device to establish a connection for the first device to serve the first device. According to this embodiment of the present invention, user equipment can select a second device to establish a connection based on a supporting status of link status information and/or link requirement information of the second device, so that the connection can be established more appropriately. Particularly, when one or more communication connections have been established between the user equipment and a network device, a communication rate can be improved effectively. In addition, user equipment with a relay capability can be used as the second device to reduce network deployment costs.

In a possible design, the first device has a connection to a second network device, and the method further includes: determining, by the first device, information about a selected second user equipment and information about a selected first network device; and sending, by the first device, the information about the selected second user equipment and the information about the selected first network device to the second network device, so that the second network device instructs the first network device to allocate a resource for communication between the second user equipment and the first device to the second user equipment, or the second network device allocates a resource for communication between the second user equipment and the first device to the first device based on the information about the selected first network device and/or the information about the selected second user equipment.

According to a fourth aspect, an embodiment of the present invention provides a communication method. The method includes: sending, by a second device, a third message to a first device, where the third message carries second information, the second information includes user equipment indication information supported by a second device, and the indication information includes a supported user equipment link status and/or link requirement, or an unsupported user equipment link status and/or link requirement; receiving, by the second device, a connection establishment request message that is sent by the first device based on the third message, where the connection establishment request message is used to instruct the second device to establish a connection for the first device; and establishing, by the second device, the connection based on the connection establishment request message to serve the first device.

In a possible design, the method further includes: receiving, by second user equipment, a fourth message sent by a first network device, where the fourth message carries indication information indicating whether the first network device is capable of serving user equipment with a specific link status and/or a specific link requirement.

In another possible design, the method further includes: sending, by the second user equipment, a request message to the first network device, where the request message is used to request the indication information indicating whether the first network device is capable of serving the user equipment with the specific link status and/or the specific link requirement.

In yet another possible design, establishing the connection by the first network device based on the connection establishment request message includes: establishing, by the first network device, a connection between the second user equipment and the first device and a connection between the second user equipment and the first network device for the first device based on the connection establishment request message; or when the second user equipment has a connection between the second user equipment and the first network device, establishing, by the first network device, a connection between the second user equipment and the first device for the first device based on the connection establishment request message; or when the first device has a connection to the second user equipment, establishing, by the first network device, a connection between the second user equipment and the first network device for the first device based on the connection establishment request message; or establishing, by the first network device, a connection between the second user equipment and the first device for the first device based on the based on the connection establishment request message.

In yet another possible design, the first device has a connection to a second network device, and the method further includes: receiving, by the first network device, an instruction message sent by the second network device, where the instruction message is used to instruct the first network device to allocate a resource for communication between the second user equipment and the first device to the second user equipment; and allocating, by the first network device based on the instruction message, the resource for communication between the second user equipment and the first device to the second user equipment.

In yet another possible design, the first device has a connection to a second network device, and the method further includes: sending, by the first network device to the second network device, information about a resource that is allocated by the first network device to the second user equipment, so that the second network device allocates a resource to the first device based on the information about the resource that is allocated by the second network device to the second user equipment.

According to a fifth aspect, an embodiment of the present invention provides a communication method. A first device has a connection to a second network device, second user equipment has a connection to a first network device, and the method further includes: receiving, by the second network device, information about the second user equipment and/or information about the first network device sent by the first device; and sending, by the second network device, an instruction message to the first network device, where the instruction message is used to instruct the first network device to allocate a resource for communication between the second user equipment and the first device to the second user equipment.

According to a sixth aspect, an embodiment of the present invention provides a multi-connection communication method. A first device has a connection to a second network device, second user equipment has a connection to a first network device, and the method includes: receiving, by the second network device, information about a resource that is allocated by the first network device to the second user equipment and that is sent by the first network device; and allocating, by the second network device, a resource for the first device based on the information about the resource that is allocated by the first network device to the second user equipment. Provided in this embodiment of the present invention.

In some possible designs of the foregoing aspects, the link status information includes any one or more of the following: a quantity of established communication links of the first device; quality of service of an established communication link of the first device; and a type of an established communication link of the first device.

In some other possible designs of the foregoing aspects, the second device includes either or both of the following: the second user equipment and the first network device.

In still some other possible designs of the foregoing aspects, the link requirement information includes any one or more of the following: a requirement of the first device for a network device that is required to serve the first device; a requirement of the first device for the second user equipment that is required to serve the first device; a requirement of the first device for a cell serving the second user equipment that is required to serve the first device; a requirement of the first device on quality of communication between the first device and a network device that is required to serve the first device; a requirement of the first device on quality of communication between the first device and the second user equipment that is required to serve the first device; and a requirement of the first device on quality of communication between the first device and a cell serving the second user equipment that is required to serve the first device.

According to a seventh aspect, an embodiment of the present invention provides a communications apparatus. The apparatus includes: a processing module, configured to determine first information, where the first information includes link status information of a first device and/or link requirement information of the first device; and a transceiver module, configured to send a first message to a second device, where the first message carries the first information, and the first message is used to instruct the second device to establish a connection for the first device based on the first message.

In a possible design, the first device has a connection to a second network device; the processing module is further configured to determine information about second user equipment and information about a first network device; and the transceiver module is further configured to send the information about the second user equipment and the information about the first network device to the second network device, so that the second network device instructs the first network device to allocate a resource for communication between the second user equipment and the first device to the second user equipment, or the second network device allocates a resource for communication between the second user equipment and the first device to the first device based on the information about the first network device and/or the information about the second user equipment.

In another possible design, the transceiver module is further configured to receive a second message sent by the second device, where the second message carries second information, the second information includes user equipment indication information supported by the second device, and the indication information includes a supported user equipment link status and/or link requirement, or an unsupported user equipment link status and/or link requirement.

In still another possible design, the processing module is further configured to: when the first device determines, based on the second message, that the second device is capable of serving first user equipment, control the transceiver module to send the first message to the second device.

According to an eighth aspect, an embodiment of the present invention provides a communications apparatus. The apparatus includes: a transceiver module, configured to receive a first message sent by a first device, where the first message carries first information, the first information includes link status information and/or link requirement information of the first device, and the first message is used to instruct second user equipment to establish a connection for the first device based on the first message; and a processing module, configured to: when determining, based on the first information, that a capability of the second user equipment meets a requirement of the first device, establish the connection to serve the first device.

In a possible design, a second device includes the second user equipment and a first network device; the transceiver module is further configured to receive a second message sent by the first network device, where the second message carries second information, the second information includes user equipment indication information supported by the first network device, and the indication information includes a supported user equipment link status and/or link requirement, or an unsupported user equipment link status and/or link requirement; and the processing module is further configured to: when the first network device is capable of serving the first device, and the capability of the second user equipment meets the requirement of the first device, establish the connection to serve the first device.

In yet another possible design, the first device has a connection to a second network device, and when the second device is the first network device, the transceiver module is further configured to receive an instruction message sent by the second network device, where the instruction message is used to instruct the first network device to allocate a resource for communication between the second user equipment and the first device to the second user equipment; and the processing module is further configured to allocate the resource for communication between the second user equipment and the first device to the second user equipment based on the instruction message.

In yet another possible design, the first device has a connection to a second network device, and when the second device is the first network device, the transceiver module is further configured to send, for the first network device to the second network device, information about a resource that is allocated by the first network device to the second user equipment, so that the second network device allocates a resource to the first device based on the information about the resource that is allocated by the first network device to the second user equipment.

According to a ninth aspect, an embodiment of the present invention provides a communications apparatus. The apparatus includes: a transceiver module, configured to receive a third message sent by at least one second user equipment or at least one first network device, where the third message carries second information, the second information includes user equipment indication information supported by the second device, and the indication information includes a supported user equipment link status and/or link requirement, or an unsupported user equipment link status and/or link requirement; and a processing module, configured to select one of the at least one second device based on the second information, where the transceiver module is further configured to send a connection establishment request message to the selected second device, where the connection establishment request message is used to instruct the selected second device to establish a connection for the first device to serve the first device.

According to a tenth aspect, an embodiment of the present invention provides a communications apparatus. The apparatus includes: a transceiver module, configured to send a third message to a first device, where the third message carries second information, the second information includes user equipment indication information supported by a second device, and the indication information includes a supported user equipment link status and/or link requirement, or an unsupported user equipment link status and/or link requirement, where the transceiver module is further configured to receive a connection establishment request message that is sent by the first device based on the third message, where the connection establishment request message is used to instruct the second device to establish a connection for the first device; and a processing module, configured to establish the connection based on the connection establishment request message to serve the first device.

In a possible design, the second device includes second user equipment and a first network device, and the transceiver module is further configured to receive, for the second user equipment, a fourth message sent by the first network device, where the fourth message carries user equipment indication information supported by the first network device.

In another possible design, the second device includes second user equipment and a first network device, and when the second device is the first network device, the transceiver module is further configured to send a third message to the second user equipment, where the third message carries second information, and the second information includes indication information indicating whether the first network device is capable of serving user equipment with a specific link status and/or a specific link requirement; the transceiver module is further configured to receive a connection establishment request message that is sent by the second user equipment based on the third message, where the connection establishment request message is used to instruct the first network device to establish a connection for the first device; and the processing module is further configured to establish the connection based on the connection establishment request.

According to an eleventh aspect, an embodiment of the present invention provides user equipment, where the user equipment has a function of implementing actions of the first device in the foregoing method designs. The function may be implemented by hardware, or may be implemented by hardware executing corresponding software. The hardware or software includes one or more modules corresponding to the foregoing function. The module may be software and/or hardware.

In a possible design, a structure of the first device includes a transceiver and a processor, and a receiver is configured to support data transmission and reception between the first device and a second device.

According to a twelfth aspect, an embodiment of the present invention provides user equipment, where the user equipment has a function of implementing actions of the second user equipment in the foregoing method designs. The function may be implemented by hardware, or may be implemented by hardware executing corresponding software. The hardware or software includes one or more modules corresponding to the foregoing function. The module may be software and/or hardware.

In a possible design, a structure of the second user equipment includes a transceiver and a processor, and a receiver is configured to support data transmission and reception between a first device and a second device.

According to a thirteenth aspect, an embodiment of the present invention provides a network device, where the network device has a function of implementing actions of the first network device in the foregoing method designs. The function may be implemented by hardware, or may be implemented by hardware executing corresponding software. The hardware or software includes one or more modules corresponding to the foregoing function.

In a possible design, a structure of the first network device includes a processor and a transceiver, and the processor is configured to support the first network device in executing a corresponding function in the foregoing methods. The transceiver is configured to: support communication between the first network device and first user equipment, and communication between second user equipment and a second network device, and transmit and receive information or an instruction in the foregoing methods. The first network device may further include a memory, and the memory is configured to be coupled with the processor, and stores a program instruction and data necessary for the first network device.

According to a fourteenth aspect, an embodiment of the present invention provides a network device, where the network device has a function of implementing actions of the second network device in the foregoing method implementations. The function may be implemented by hardware, or may be implemented by hardware executing corresponding software. The hardware or software includes one or more modules corresponding to the foregoing function.

In a possible design, a structure of the second network device includes a processor and a transceiver, and the processor is configured to support the second network device in executing a corresponding function in the foregoing methods. The transceiver is configured to: support communication between the second network device and first user equipment, and communication between second user equipment and a first network device, and transmit and receive information or an instruction in the foregoing methods. The second network device may further include a memory, and the memory is configured to be coupled with the processor, and stores a program instruction and data necessary for the second network device.

According to a fifteenth aspect, an embodiment of the present invention provides a communications system, where the system includes the first device and the second device in the foregoing aspects.

According to a sixteenth aspect, an embodiment of the present invention provides a computer storage medium, configured to store a computer software instruction to be used by the first device, where the computer software instruction includes a program that is designed for executing the foregoing aspects.

According to a seventeenth aspect, an embodiment of the present invention provides a computer storage medium, configured to store a computer software instruction to be used by the second device, where the computer software instruction includes a program that is designed for executing the foregoing aspects.

According to the embodiments of the present invention, a connection can be established for the user equipment based on link status information and/or link requirement information of the user equipment, so that the connection can be established more appropriately. Particularly, when one or more communication connections have been established between the user equipment and the network device, a communication rate can be improved effectively according to the embodiments of the present invention. In addition, the user equipment with a relay capability can be used as the second device, to reduce network deployment costs.

### BRIEF DESCRIPTION OF DRAWINGS

FIG. 1A shows an example of a scenario in which user equipment accesses a network device;
FIG. 1B shows another example of a scenario in which user equipment accesses a network device;
FIG. 2 is a system architecture diagram;
FIG. 3 is a flowchart of a communication method according to a method embodiment of the present invention;
FIG. 4 is a flowchart of another communication method according to a method embodiment of the present invention;
FIG. 5 is a flowchart of still another communication method according to a method embodiment of the present invention;
FIG. 6 is a flowchart of yet another communication method according to a method embodiment of the present invention;
FIG. 7 is a schematic structural diagram of first user equipment according to a method embodiment of the present invention;
FIG. 8 is a schematic structural diagram of second user equipment according to a method embodiment of the present invention;
FIG. 9 is a schematic structural diagram of a first network device according to a method embodiment of the present invention;
FIG. 10 is a schematic structural diagram of a second network device according to a method embodiment of the present invention;
FIG. 11 shows a virtual communications apparatus according to an embodiment of the present invention;
FIG. 12 shows another virtual communications apparatus according to an embodiment of the present invention;
FIG. 13 shows still another virtual communications apparatus according to an embodiment of the present invention; and
FIG. 14 shows yet another virtual communications apparatus according to an embodiment of the present invention.

### DESCRIPTION OF EMBODIMENTS

To make the purpose, technical solutions, and advantages of the embodiments of the present invention clearer, the following clearly and completely describes the technical solutions of the embodiments of the present invention with reference to the accompanying drawings in the embodiments of the present invention.

In the embodiments of the present invention, first user equipment may include various devices with a wireless communication function, such as a handheld device, an in-vehicle device, a wearable device, a computing device, or another processing device connected to a wireless modem, and various forms of user equipments (User Equipment, UE), mobile stations (Mobile station, MS), terminals (terminal), terminal equipment (Terminal Equipment), and the like. For ease of description, in this application, the devices mentioned above are collectively referred to as a first device, first user equipment, or UE.

Second user equipment may include various devices that have a wireless communication function and can provide a relay service, such as a handheld device, an in-vehicle device, a wearable device, a computing device, or another processing device connected to a wireless modem, and various forms of user equipments, mobile stations, terminals, terminal equipment, and the like. For ease of description, in this application, the devices mentioned above are collectively referred to as second user equipment or RUE (Relay User Equipment, RUE).

A network device may include an access network device, a core network device, and the like. The core network device is connected to user equipment by using the access network device.

The access network device may be an apparatus deployed on a radio access network to provide a wireless communication function for UE or RUE. The apparatus may include various forms of macro base stations, small cells, relay nodes, access points, and the like. In systems using different radio access technologies, a device with a base station function may have different names. For example, the device is referred to as an evolved NodeB (evolved NodeB, eNB or eNodeB for short) in an LTE network; the device is referred to as a NodeB (NodeB) in a 3rd Generation 3G network, and the like. For ease of description, in this application, the apparatuses providing a wireless communication function for UE are collectively referred to as an access network device or an eNB.

The core network device may be a device that provides a user connection, performs user management, establishes a service bearer, and serves as an interface provided by a bearer network for an external network. User connection establishment includes functions such as mobility management (MM), call management (CM), switching/routing, and recorded announcement (establishing a connection relationship with an intelligent network peripheral device in combination with an intelligent network service). User management includes user description, QoS (Quality of Service, quality of service), user communication accounting

(Accounting), a virtual home environment provided by using a session with an intelligent network platform, and security (corresponding security measures provided by an authentication center include security management for a mobile service and security processing for external network access). A bearer connection (Access to) includes access to an external PSTN, an external circuit data network, a data packet network, the Internet, an intranet, an SMS server of a mobile communications network, and the like. Basic services that can be provided by the core network include mobile office, e-commerce, communication, entertainment services, travelling, location-based services, telemetry (Telemetry) services, simple message transfer services (monitoring and control), and the like. For example, the core network device may be an MME (Mobility Management Entity, mobility management entity) or an SGW (Serving GateWay, serving gateway) in an LTE network. For ease of description, in this application, the devices that provide user connections, perform user management, establish service bearers, and serve as interfaces provided by a bearer network for an external network are collectively referred to as core network devices.

The first user equipment and the second user equipment support D2D (Device-to-Device, device-to-device) communication. For example, both the first user equipment and the second user equipment support a Bluetooth function, a Wi-Fi (Wireless Fidelity, wireless fidelity) function, or a PC5 interface. It should be known that, the specific implementations of D2D communication herein are merely examples, and other implementations for implementing communication between two user equipments should also be included. Details are not described herein.

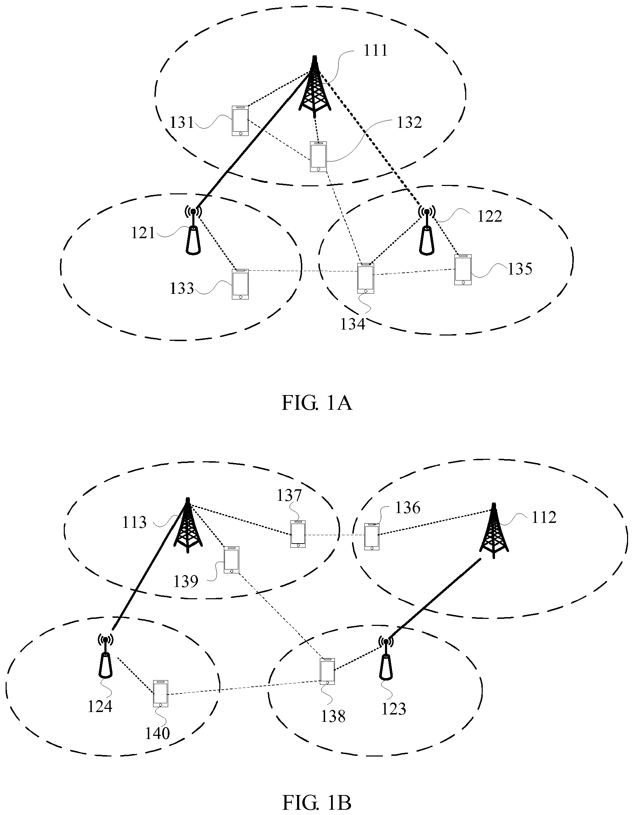

To be distinguished from the first device, the second user equipment and the network device may be collectively referred to as a second device. FIG. 1A and FIG. 1B show a plurality of scenarios in which user equipment accesses a network device.

As shown in FIG. 1A, there are a macro base station 111, a small cell 121, a small cell 122, user equipments 131 to 135, and the like. In the scenario shown in FIG. 1A, the small cell 121 and the small cell 122 are controlled by the macro base station 111; the user equipment 131 and the user equipment 132 are within a coverage area of the macro base station 111; the user equipment 133 is within a coverage area of the small cell 121; and the user equipment 134 and the user equipment 135 are within a coverage area of the small cell 122.

There may be the following connections in the scenario shown in FIG. 1A:
1. User equipment is directly connected to a macro base station. For example, the user equipment 131 and the user equipment 132 are directly connected to the macro base station 111.
2. User equipment directly connected to a macro base station serves as RUE, and another user equipment is connected to the same macro base station by using the RUE. For example, the user equipment 131 serves as the RUE, and the user equipment 132 and the user equipment 134 are connected to the macro base station 111 by using the user equipment 131.
3. User equipment is connected to a macro base station by using a small cell. For example, the user equipment 133 is connected to the macro base station 111 by using the small cell 121; and the user equipment 134 and the user equipment 135 are connected to the macro base station 111 by using the small cell 122.
4. User equipment served by a small cell serves as RUE, and another user equipment served by the same small cell is connected to a macro base station by using the RUE. For example, the user equipment 135 serves as the RUE, and the user equipment 134 is connected to the small cell 122 and the macro base station 111 by using the user equipment 135.
5. User equipment served by a small cell serves as RUE, and another user equipment served by another small cell is connected to a macro base station by using the RUE; or user equipment outside of a coverage area of a small cell serves as RUE, and user equipment within the coverage area of the small cell is connected to a macro base station by using the RUE. For example, the user equipment 133 serves as the RUE, and the user equipment 134 is connected to the small cell 121 and the macro base station 111 by using the user equipment 133; or the user equipment 132 serves as the RUE, and the user equipment 134 is connected to the macro base station 111 by using the user equipment 132.

As shown in FIG. 1B, there are a macro base station 112, a macro base station 113, a small cell 123, a small cell 124, user equipments 136 to 139, user equipment 140, and the like. In a scenario shown in FIG. 1B, the small cell 123 is controlled by the macro base station 112, and the small cell 124 is controlled by the macro base station 113; the user equipment 137 and the user equipment 139 are within a coverage area of the macro base station 113; the user equipment 136 is within a coverage area of the macro base station 112; the user equipment 138 is within a coverage area of the small cell 123; and the user equipment 140 is within a coverage area of the small cell 124.

There may be the following connections in the scenario shown in FIG. 1B:
6. User equipment directly connected to a macro base station serves as RUE, and another user equipment directly connected to another macro base station is connected to the macro base station by using the RUE. For example, the user equipment 136 is directly connected to the macro base station 112, the user equipment 136 serves as the RUE, and the user equipment 137 is connected to the user equipment 112 by using the user equipment 136; or the user equipment 139 is connected to the macro base station 113, the user equipment 139 serves as the RUE, and the user equipment 138 is connected to the macro base station 113 by using the user equipment 139.
7. User equipment served by a small cell that is connected to a macro base station serves as RUE, and another user equipment served by another small cell that is connected to another macro base station is connected to the macro base station by using the RUE. For example, the user equipment 140 is connected to the macro base station 113 by using the small cell 124, the user equipment 140 serves as the RUE, and the user equipment 138 is connected to the small cell 124 and the macro base station 113 by using the user equipment 140.
8. User equipment is directly connected to another user equipment. For example, the user equipment 136 is connected to the user equipment 137.

In the embodiments of the present invention, the user equipment may access the core network device by using any one or more of the foregoing connections. The user equipment may further access the Internet.

It should be noted that, one macro base station may manage a plurality of small cells, one small cell may access a plurality of user equipments, and there may be an overlap coverage area between small cells, between a macro base station and a small cell, and between macro base stations. One user equipment may discover a plurality of cells by using a discovery function, where the a plurality of small cells are corresponding to one or more base stations (macro base stations, small cells, and the like), and may further discover a plurality of RUEs, where the a plurality of RUEs may be served by a same cell or different cells.

It should also be noted that, the macro base station or the small cell shown in FIG. 1A and FIG. IB may be another access network device, and an access manner is similar to the foregoing connection manners. Details are not described herein.

It should also be noted that, there may still be a plurality of connection manners in addition to those shown in FIG. 1A and FIG. IB. For brevity, details are not described herein.

It should be known that, the foregoing definitions are merely for clearer description, and do not constitute any limitation on the present invention.

The technology described in the present invention may be applied to a Long Term Evolution (Long Term Evolution, LTE for short) system, or other wireless communications systems that use various radio access technologies, for example, systems that use Code Division Multiple Access, Frequency Division Multiple Access, Time Division Multiple Access, orthogonal frequency division multiple access, single carrier frequency division multiple access, and other access technologies. In addition, the technology may also be applicable to an evolved LTE system, for example, a 5th generation 5G system. For clear description, only an LTE system is used as an example herein. In the LTE system, an evolved UMTS terrestrial radio access network (Evolved Universal Terrestrial Radio Access Network, E-UTRAN) serves as a radio access network, and an evolved packet core (Evolved Packet Core, EPC) serves as a core network.

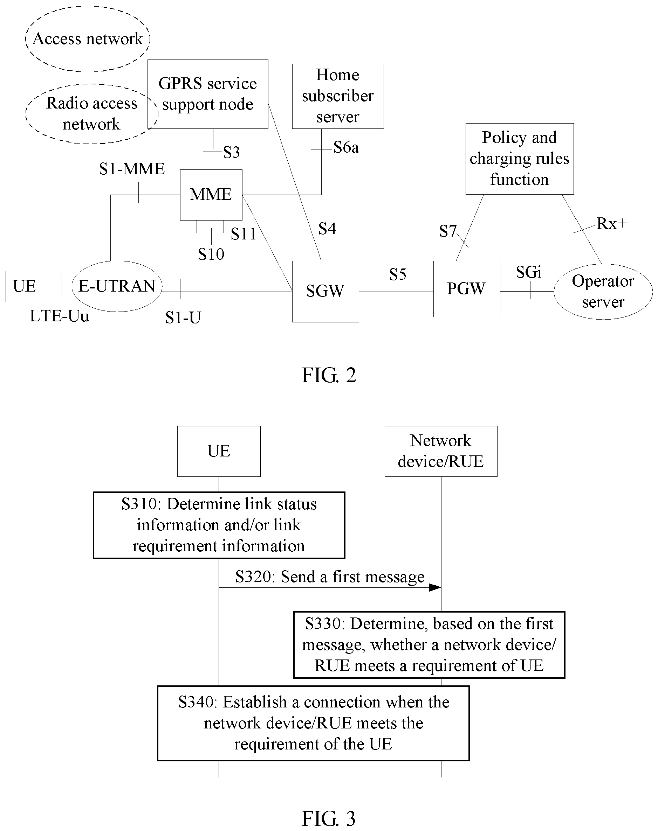

In a standard 3GPP release 8 (Release 8, R8) phase, a brand-new evolved network is developed. A system architecture of the evolved network is shown in FIG. 2, and includes an evolved universal terrestrial radio access network (Evolved Universal Terrestrial Radio Access Network, E-UTRAN), an MME, a PGW, an SGW, a home subscriber server (Home Subscriber Server, HSS), a policy and charging rules function (Policy and Charging Rules Function, PCRF), an external packet data network (Packet Data Network, PDN), an authentication, authorization, and accounting (Authentication, Authorization, and Accounting, AAA) server, a Dynamic Host Configuration Protocol (Dynamic Host Configuration Protocol, DHCP) server, a universal terrestrial radio access network (Universal Terrestrial Radio Access Network, UTRAN), a Global System for Mobile Communications/Enhanced Data Rates for GSM Evolution Radio Access Network (Global System for Mobile Communications Enhanced Data Rate for GSM Evolution Radio Access Network, GERAN), a serving general packet radio service support node (Serving General Packet Radio Service Support Node, SGSN), and the like.

The E-UTRAN is configured to implement all wireless-related functions of the evolved network.

The MME is responsible for mobility management on a control plane, including user context management and mobile status management, allocation of a temporary mobile subscriber identity (Temporary Mobile Subscriber Identity, TMSI), and the like.

The S-GW is a user-plane anchor between 3GPP access networks, and is an interface for the E-UTRAN.

The PGW is a user-plane anchor between a 3GPP access network and a non-3GPP access network, and is an interface for the PDN.

The HSS is configured to store user subscription information.

The MME, the SGW, the PGW, and the HSS are usually serve as core network devices.

After user equipment accesses the E-UTRAN over a radio air interface, the user equipment is attached to the MME, and the MME obtains subscription data and authentication information of the user equipment (User Equipment, UE) from the HSS, and initiates a UE authentication procedure. After the MME completes the authentication procedure, the user equipment or the MME initiates a procedure of establishing a bearer for user data transmission. In the procedure, the MME instructs the SGW to establish a bearer for the user equipment, and adds, to a notification message, a PGW address and address information of the E-UTRAN network device serving the user equipment. The SGW establishes, for the user equipment, the bearer between the E-UTRAN and the PGW for user data transmission. By using the bearer, the PGW forwards, to the UE, downlink data from the external PDN, and forwards, to the corresponding PDN, uplink data from the UE.

To be compatible with existing UTRAN and GERAN access networks, the UE may access the MME by using the UTRAN or the GERAN and the SGSN, and establish a General Packet Radio Service Tunneling Protocol (General Packet Radio Service Tunneling Protocol, GTP) connection between the UE and the SGW by using the UTRAN/GERAN and the SGSN. The SGW converts a GTP tunnel into a corresponding bearer connected to the PGW, so as to transmit user data. The UTRAN may also establish a GTP tunnel directly connected to the SGW

The MME is a network device processing only control-plane signaling, and the SGW and the PGW are mainly responsible for user-plane data forwarding. The SGW and the PGW may be integrated into one network device, usually known as a gateway.

On the evolved network, a gateway still needs to have a capability of processing a large amount of interface signaling. The interface signaling includes bearer interface signaling, policy and charging control (PCC) interface signaling, charging interface signaling, lawful interception interface signaling, and external PDN interface signaling (such as DHCP and AAA).

In the embodiments of the present invention, when a connection is established between the first device and the second device, or the first device establishes a connection to another device or the Internet by using the second device, the following solutions may be used:
Solution 1: The first user equipment may send status information of an established link of the first user equipment, or link requirement information of a to-be-established connection, or a combination of the foregoing two types of information to the second device, so that the second device determines whether the second device can establish a connection. Specifically, the first device determines first information, where the first information includes link status information of the first device and/or link requirement information of the first device; and the first user equipment sends a first message to the second device, where the first message carries the first information, and the first message is used to instruct the second device to establish the connection for the first device based on the first message. After the second device receives the first information sent by first user equipment, when the second device determines, based on the first information, that the second device has a capability to meet a requirement of the first device, the second device establishes a connection to the first device, or the second device, serving as a relay, establishes a connection to another device or the Internet.
Solution 2: The second device may send information about a link status and/or a link requirement supported by the second device to the first device, and the first device selects an optimal second device to establish the connection. Specifically, the second device sends a third message to the first device, where the third message carries second information, the second information includes user equipment indication information supported by the second device, and the indication information includes a supported user equipment link status and/or link requirement, or an unsupported user equipment link status and/or link requirement. The first device receives a third message sent by at least one second device, where the third message carries the second information. The first device selects one of the at least one second device based on the second information, and sends a connection establishment request message to the selected second device, where the connection establishment request message is used to instruct the selected second device to establish a connection for the first device to serve the first device. The second device receives the connection establishment request message sent by the first device; and based on the connection establishment request message, the second device establishes the connection between the second device and the first device, or the second device, serving as a relay, establishes a connection between the first device and another device or the Internet.

For ease of understanding the embodiments of the present invention, specific embodiments are further described below with reference to the accompanying drawings by using UE and RUE as examples. The embodiments do not constitute any limitation on the embodiments of the present invention.

FIG. 3 is a flowchart of a communication method according to a method embodiment of the present invention. In this embodiment of the present invention, UE may send a requirement and/or a status of the UE to RUE or a network device.

Specific steps are as follows:
S310: The UE determines first information, where the first information may include link status information of the UE and/or link requirement information of the UE.

There are one or more connections for the UE. Any one of the one or more connections may be any connection described in FIG. 1A and FIG. IB. The UE may determine a link status of the connection.

The link status information of the UE may be used to indicate characteristic information of a status of an established communication connection of the UE, including but not limited to any one or more of the following:
a quantity of established communication links of the UE, where, for example, the quantity of communication links increases by 1 each time a link between the UE and the network device is established; and the quantity of communication links also increases by 1 each time one connection between the UE and the network device is established by using a relay device;
quality of an established communication link of the UE, for example, QoS (Quality of Service, quality of service) and a signal to interference plus noise ratio that are of the existing communication link of the UE; and
a type of an established communication link of the UE, for example, a connection established directly between first user equipment and the network device, or a connection established between first user equipment and the network device by using a relay device.

When the UE performs communication, to be specific, when the UE performs communication with the network device or the relay device, or when the UE performs communication with the RUE, there is a requirement for improving a data transmission rate. For example, when a user watches a video online by using user equipment such as a mobile phone or a tablet computer, higher definition resolution of the video indicates larger data traffic for watching the video online. Therefore, when the data transmission rate of an existing link is insufficient, frame freezing is caused. Alternatively, a video call made by a user with user equipment, such as a mobile phone or a tablet computer, requires relatively large real-time traffic. Therefore, when the data transmission rate of an existing link is insufficient, problems such as a delay or frame freezing is caused.

The UE may monitor the case in which the data transmission rate needs to be improved. When the foregoing case occurs, the UE may establish one or more new connections to improve the data transmission rate. Any one of the one or more connections may be any connection described in FIG. 1A and FIG. IB.

In a procedure of establishing, by the UE, a connection between the UE and the network device, the UE may choose to establish the connection to the network device by using the RUE. Preferably, the RUE may be in a cell different from a cell serving the UE, and even may be connected to an access network device different from that serving the UE, so that the UE can use a resource of the cell serving the RUE, to improve quality of service more effectively. The user equipment may determine the link requirement.

The link requirement information of the UE may be used to indicate a requirement of the UE for a second device serving the UE, including but not limited to any one or more of the following:
a requirement of the UE for a network device that is required to serve the UE, for example, a requirement of the UE on capacity of the network device that is required to serve the UE, or a requirement that the UE only needs one network device that can serve the UE, or a requirement that the UE only needs one RUE and does not need to be connected to a network device;
a requirement of the UE for RUE that is required to serve the UE, for example, a requirement of the UE for a relay capability of the RUE;
a requirement of the UE for a cell serving RUE that is required to serve the UE, for example, a requirement that the UE only needs one RUE in a cell different from a cell serving the UE, to serve the UE;
a requirement of the UE on quality of communication between the UE and a network device that is required to serve the UE, for example, a requirement on QoS quality;
a requirement of the UE on quality of communication between the UE and RUE that is required to serve the UE, for example, a requirement on QoS quality or a distance;
a requirement of the UE on quality of communication between the UE and a cell serving RUE that is required to serve the UE; and
priorities of the requirements, and the like.

The link requirement information of the first device may be determined according to a requirement of a running application of the first device on a network rate. For example, a video player may play videos in formats of standard definition (480P), high definition (720P), and super definition (1080P), that is, corresponding to signals of different quality. When the video player plays a standard definition video and the first device determines the link requirement, the first device may require any second device to serve the first device. When the video player plays the high definition video, the first device may require a second device in another cell to serve the first device. When the video player plays the super definition video, the first device may require a second device that is in another cell and whose quality of communication with the first device needs to meet a specific requirement.

A process in which the UE chooses to establish the connection to the network device by using the RUE as the relay device is as follows:
S320: The UE sends a first message to RUE and/or a network device, where the first message carries the first information, and the first message is used to instruct the RUE and/or the network device to establish a connection for the UE based on the first message.

That the first message is used to instruct the RUE and/or the network device to establish a connection for the UE based on the first message may specifically include the following cases:
when the UE has no connection to the RUE, and the RUE has no connection to the network device, the first message may be used to instruct the RUE and/or the network device to establish a connection between the RUE and the UE and a connection between the RUE and the network device for the UE based on the first message; or
when the RUE has a connection between the RUE and the network device, the first message may be used to instruct the RUE and/or the network device to establish a connection between the RUE and the UE for the UE based on the first message; or
when the UE has a connection between the UE and the RUE, the first message may be used to instruct the RUE and/or the network device to establish a connection between the RUE and the network device for the UE based on the first message; or
when only a connection to the RUE needs to be established, the first message may be used to instruct the RUE and/or the network device to establish a connection between the RUE and the UE for the UE based on the first message.

It should be noted that, the connection between the RUE and the UE may include any connection in the D2D communication manner. According to protocol specifications, a PC5 interface-based connection can be established only after being allowed by the network device to which the RUE is connected or on which the RUE is camped. Therefore, the UE may send a connection establishment request (for example, the first message) to the network device to which the RUE is connected or on which the RUE is camped, to request to establish the connection between the RUE and the UE; or the UE may send a connection establishment request (for example, the first message) to the RUE, and then the RUE requests the network device to which the RUE is connected or on which the RUE is camped to establish the connection between the RUE and the UE.

S330A: When determining, based on the first information, that a capability of the RUE meets a requirement of the UE, the RUE establishes a connection to serve the UE.

The RUE determines, based on the first information, whether the RUE meets the requirement of the UE, or whether the network device corresponding to the RUE meets the requirement of the UE.

The RUE may determine a requirement degree of the UE for a new link based on the first information. For example, the RUE receives first information sent by a plurality of UEs, and the RUE may determine a priority order based on quantities of established communication links of the UEs, where UE with a minimum quantity of established communication links has a highest priority; or the RUE may determine a priority order based on quality of established communication links of the UEs, where UE has poorest quality of an established communication link has a highest priority; or the RUE determines a priority order based on types of established communication links of the UEs, where UE with most relay devices on a connection between the UE and the network device has a highest priority; or the UE determines a priority order based on a combination of any two or three of the foregoing cases, or the like.

The RUE may determine, based on the first information, a level of requirement of the UE for the established link. For example, the RUE determines the level of requirement based on the quantities of the established communication links of the UEs, where UE with a larger quantity of established communication links has a lower level of requirement; or the RUE determines the level of requirement based on the quality of the established communication links of the UEs, where UE with worse quality of an established communication link has a lower level of requirement; or the RUE determines the level of requirement based on the types of the established communication links of the UEs, where UE with a large quantity of relay devices on a connection between the UE and the network device has a lower level of requirement; or the RUE determines the level of requirement based on a combination of two or more of the foregoing cases, or the like.

When the RUE establishes the connection to serve the UE, the RUE may establish a connection for UE with a highest level of requirement for a new link, to serve the UE; or may break, based on a level of requirement of the UE for an established link, a connection corresponding to the established link that has a low requirement, and establish a connection for UE with a high level of requirement for a new link, to serve the UE, so that more resources are determined to serve the UE with a high level of requirement for a new link. The RUE may further determine, based on the first information, whether the RUE meets the requirement of the UE, especially a requirement clearly specified in the first information. For example, the RUE performs determining based on the link requirement of the UE.

It should be noted that, the RUE may determine, based on the foregoing information, whether the RUE can serve the UE.

After receiving the first information, the RUE may establish, based on the first information, the connection in the following manners.

### Manner 1:

Step A11: The network device sends a second message to the RUE, where the second message carries second information, and the second information includes a link status and/or a link requirement of user equipment supported by a first network device or a link status and/or a link requirement of unsupported user equipment.

The network device may proactively send the link status and/or the link requirement of the supported user equipment or the link status and/or the link requirement of the unsupported user equipment to the RUE in a manner of, for example, broadcasting system information at a broadcast frequency that is determined based on an actual requirement.

The user equipment link status supported by the network device or the user equipment link status not supported by the network device includes any one or more of the following:
a requirement on a quantity of established communication links of the UE;
a requirement on quality of an established communication link of the UE;
a requirement on a type of an established communication link of the UE, and the like.

The user equipment link requirement supported by the network device or the user equipment link requirement not supported by the network device includes any one or more of the following:
an achievable requirement of the UE for the network device that is required to serve the UE;
an achievable requirement of the UE for the RUE that is required to serve the UE;
an achievable requirement of the UE for a cell serving the RUE that is required to serve the UE;
an achievable requirement of the UE on quality of communication between the UE and the network device that is required to serve the first device;
an achievable requirement of the UE on quality of communication between the UE and the RUE that is required to serve the UE;
an achievable requirement of the UE on quality of communication between the UE and a cell serving the RUE that is required to serve the UE, and the like.

The network device may determine the foregoing information based on an actual status of the network device, or may be predefined by the network device.

Step A12: The RUE receives the second information sent by the network device.

Step A13: The RUE determines, based on the second information, the first information, and a specific link status and/or a specific link requirement that the RUE can support, whether the RUE can establish a first connection to serve the UE.

The RUE may determine, based on the second information and the first information, whether the network device meets a condition for establishing a connection for the UE.

The RUE may determine, based on the first information and the specific link status and/or the specific link requirement that the RUE can support, whether the RUE meets a condition for establishing a connection for the UE.

Step A14: When the RUE meets a condition for establishing a connection, the RUE establishes the connection. The connection may include a connection between the UE and second user equipment, and a connection between the RUE and the first network device.

### Manner 2:

A step different from manner 1 lies in the obtaining of the second information. The RUE may first send, to the network device, a second-information obtaining request. After receiving the second-information obtaining request sent by the RUE, the network device sends the second information to the RUE.

### Manner 3:

Step A21: After receiving the first information, the RUE sends a request message to the network device, where the request message carries the first information, and a user equipment link status and/or link requirement that the RUE can support, or user equipment link status and/or link requirement that the RUE does not support.

Step A22: The network device determines whether a condition for establishing a first connection for the UE is met, based on user equipment link status and/or link requirement that the network device can support or user equipment link status and/or link requirement that the network device does not support, the user equipment link status and/or link requirement that the RUE can support or the user equipment link status and/or link requirement that the RUE does not support, and the first information,.

The network device may determine, based on the user equipment link status and/or link requirement that the network device can support or the user equipment link status and/or link requirement that the network device does not support, and the first information, whether the network device meets a condition for establishing a connection for the UE.

The network device may determine, based on the first information, and the user equipment link status and/or link requirement that the RUE can support or the user equipment link status and/or link requirement that the RUE does not support, whether the RUE meets a condition for establishing a connection for the UE.

Step A23: When the condition for establishing the connection is met, the network device establishes the connection.

### Manner 4:

A step different from Manner 3 lies in the determining of whether the RUE meets the condition for establishing the connection for the UE. The RUE may perform the determining by itself, and the RUE sends the first information and a determining result to the network device when meeting the condition. The network device determines whether the network device meets the condition for establishing the condition for the UE, and establishes the connection when meeting the condition.

### Manner 5:

A step different from manner 3 and manner 4 lies in connection establishment. When the network device determines that the RUE meets the condition for establishing the connection for the UE and the network device meets the condition for establishing the connection for the UE, the network device sends a result to the RUE, and the RUE initiates connection establishment. Alternatively, when the network device determines that the network device meets the condition for establishing the first connection for the UE, the network device sends a result to the RUE, and the RUE determines that RUE meets the condition for establishing the connection for the UE, and initiates connection establishment.

S330B: The network device establishes a connection for the UE based on the first message.

After receiving the first message, the network device selects, based on the first information carried in the first message, one of a plurality of RUEs that have accessed the network device or that camp on the network device, and establishes, by using the selected RUE, the connection to serve the UE. The established connection herein is mainly a connection between the selected RUE and the UE. In addition, a condition for selecting the RUE may be determined based on a distance between the UE and the RUE, whether the UE and the RUE are in neighboring cells, and information such as a relay capability of the RUE, to select optimal RUE to serve the UE. The information such as the relay capability of the RUE herein may be obtained when the RUE accesses a network.

It should be known that, the relay capability of the RUE may be data information that can reflect a data transfer capability of the RUE, such as maximum traffic that the RUE can provide for the UE, or a maximum data transmission rate that the RUE serving as the relay device can provide.

When the UE determines that the RUE has a capability to provide a relay service for the UE, and the network device corresponding to the RUE allows the RUE to provide a relay service for the UE, the UE may establish a connection between the UE and the network device by using the RUE, and some data transmission services are offloaded by using the connection. This can effectively improve the data transmission rate, reduce operation costs, and improve user experience.

The following further describes this embodiment of the present invention with reference to an accompanying drawing.

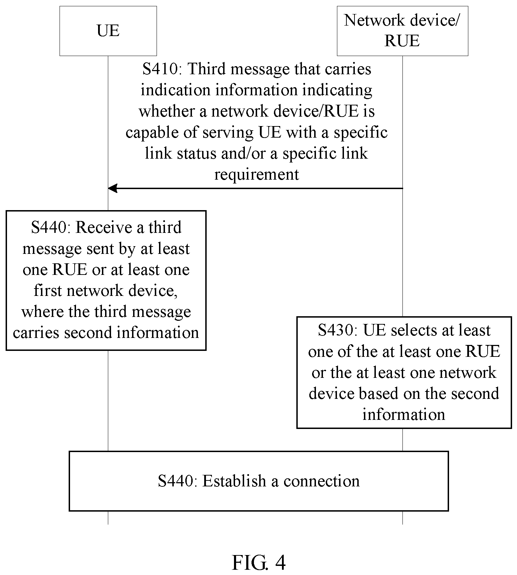

As shown in FIG. 4, in this embodiment of the present invention, the RUE and/or the network device may send, to the UE, the link status and/or the link requirement supported by the RUE and/or the network device, and the UE determines, based on the link status and/or the link requirement supported by the RUE and/or the network device, which RUE or network device a connection is to be established to. Specific steps are as follows:
S410A: The RUE sends a third message to the UE, where the third message carries second information, and the second information includes indication information indicating whether the RUE and/or the network device is capable of serving user equipment with a specific link status and/or a specific link requirement.

S410B: The network device sends a third message to the UE, where the third message carries second information, and the second information includes a user equipment link status and/or link requirement supported by the RUE and/or the network device, or a user equipment link status and/or link requirement not supported by the RUE and/or the network device.

The third message may further carry information about a communication capability of the network device. For example, the second information may carry information about a remaining resource or an occupied resource, or a usage status of a resource occupied by the RUE. This can help the UE determine, based on the information, whether to select the RUE or the network device for communication.

It should be known that, the user equipment link status and/or link requirement supported by the network device or the user equipment link status and/or link requirement not supported by the network device may further include but not limited to: whether the network device is capable of serving UE in a neighboring cell serving the RUE, whether the network device is capable of serving another UE corresponding to a network device other than the network device accessed by the UE, and the like.

The RUE has a connection to the network device. The network device allocates a cell for the RUE, the RUE may broadcast an identifier of the cell serving the RUE, and the UE may determine, based on the identifier of the cell, whether the RUE and the UE are in a same cell, or served by a same network device, or the like, so that the UE can select more appropriate RUE.

The second information may further carry the RUE's willingness to provide a relay service. Specifically, the second information may carry the RUE's willingness to provide the relay service for UE in a neighboring cell, and/or the RUE's willingness to provide the relay service for UE connected to another network device.

S420: The UE receives the third message sent by at least one RUE or at least one network device, where the third message carries second information, and the second information includes the user equipment link status and/or link requirement supported by the RUE and/or the network device, or the user equipment link status and/or link requirement not supported by the RUE and/or the network device.

In addition, in a specific implementation process of this embodiment of the present invention, the second information may be obtained in the following manners.

The second information may include two parts: A first part is the user equipment link status and/or link requirement supported by the RUE, or the user equipment link status and/or link requirement not supported by the RUE. A second part is a user equipment link status and/or link requirement supported by a network device or a user equipment link status and/or link requirement not supported by a network device, where the network device is a network device that is connected to the RUE, that the RUE camps on, or that meets a condition for establishing a connection to the RUE.

The RUE may determine the user equipment link status and/or link requirement supported by the RUE, or the user equipment link status and/or link requirement not supported by the RUE, that is, the first part of the second information. Likewise, the network device may determine the user equipment link status and/or link requirement supported by the network device or the user equipment link status and/or link requirement not supported by the network device, that is, the second part of the second information.
Manner 1: The network device sends the second part of the second information to the RUE; and with reference to the first part of the second information, the RUE obtains the second information, and sends the second information to the UE.
Manner 2: When accessing the network device, the RUE sends the first part of the second information to the network device; and with reference to the second part of the second information, the network device obtains the second information, and sends the second information to the UE.
Manner 3: The RUE sends the first part of the second information to the UE, and adds an identifier of a network device that second user equipment accesses or camps on; the UE requests the network device for the second part of the second information; and the network device sends the second part of the second information to the UE.
Manner 4: The network device sends the second part of the second information to the UE; the RUE sends the first part of the second information to the UE, and adds an identifier of a network device that second user equipment accesses or camps on; and the UE determines, based on the identifier of the network device sent by the RUE, the second part of the second information corresponding to the network device.

S430: The UE selects one of the at least one RUE and/or the at least one first network device based on the second information.

The UE may receive second information sent by one or more RUEs or one or more network devices. The UE may select, based on the second information corresponding to the RUEs or the network devices, optimal RUE or an optimal network device to provide a relay service for the UE. For example, the UE may select RUE with a strongest relay capability in a neighboring cell. In addition, the UE may further consider signal quality of communication between RUEs and the UE. For example, the UE selects the RUE in the following priority order: whether the RUE is in a neighboring cell, whether signal quality of communication between the RUE and the UE is strongest, whether the RUE has a strongest relay capability. Alternatively, the UE may obtain a comprehensive score based on information such as whether the RUE is in a neighboring cell, whether signal quality of communication between the RUE and the UE is strongest, and whether the RUE has a strongest relay capability, and select the RUE based on the comprehensive score. Further, the UE may set weights for different priorities, to obtain the comprehensive score.

S440: The UE sends a connection establishment request message to the selected RUE or the selected network device, where the connection establishment request message is used to instruct the selected RUE or the selected network device to establish a connection for the UE, and the connection is a connection between the UE and the network device through the RUE; and after receiving the connection establishment request message sent by the UE, the selected RUE or the selected network device establishes the connection between the UE and the network device through the RUE.

In this embodiment of the present invention, as described in the embodiment shown in FIG. 3, the connection establishment request message sent by the UE may further carry a link requirement and/or link status of the UE, so that the RUE or the network device further determines whether the RUE or the network device is capable of serving the UE.

In addition, in the embodiment shown in FIG. 3 or FIG. 4, the RUE or the network device may determine, based on the link status information of the UE and/or the link requirement information of the UE, whether a to-be-established connection is necessary for the UE. Alternatively, if the RUE or the network device already serves one UE, the RUE or the network device may determine, based on link status information of the specific UE and/or link requirement information of the specific UE, whether a connection is necessary for the specific UE. For example, in a specific implementation process, after receiving the connection establishment request sent by the UE, the RUE determines, based on the link status information of the UE and/or the link requirement information of the UE, that the to-be-established connection has a relatively large effect on the obtaining of a network service by the UE (for example, other existing connections of the UE all have relatively poor QoS quality). In the case, if the RUE has a connection to another UE, and the RUE provides a relay service for the another UE, the RUE determines, based on link status information of the another UE and/or link requirement information of the another UE, that the connection between the RUE and the another UE is not necessary for the another UE (for example, at least one of other existing connections of the another UE has relatively good QoS quality), the RUE may break the connection between the RUE and the another UE, and establishes a connection between the RUE and the UE, to provide a relay service for the UE. It should be noted that, whether QoS quality is good or not may be determined based on a specific service requirement. For example, the QoS quality is relatively good if a smooth online video service can be provided; the QoS is relatively poor if a smooth online video service cannot be provided. Alternatively, whether the QoS is good or not may be determined based on a specific QoS quality index. A QoS quality index greater than a threshold indicates relatively good QoS, and a QoS quality index less than the threshold indicates relatively poor QoS.

In a specific implementation process of this embodiment of the present invention, based on the embodiments shown in FIG. 3 and FIG. 4, in a process of communication between the UE and the RUE, the UE has a connection to a second network device, the RUE has a connection to the first network device or meets a condition for establishing a connection between the RUE and the first network device, or the RUE camps on the first network device. If the UE and the RUE establish a connection by using a PC5 interface, resources allocated by the second network device and the first network device need to be used. For example, if the UE is outside of a coverage area of the first network device, a resource configured by the first network device for the RUE for D2D communication, regardless of whether the resource is configured or is selected by the RUE from a pool (pool), may conflict with a resource configured by the second network device for the UE for establishing a connection to the network device, or a resource used for D2D communication between the UE and another RUE. To reduce resource conflict, specifically, the following steps may be further included.

S510: The UE determines information about the RUE and information about the first network device, and sends the information about the RUE and the information about the first network device to the second network device.

The information about the RUE may include an identifier of the RUE, an identity of a cell on which the RUE camps, and the like. The information about the first network device may include an identifier of the first network device, and the like. The UE may receive the foregoing information in a device discovery process.

S520: The second network device receives the information about the RUE and/or the information about the first network device sent by the UE, and may instruct, based on the information about the RUE and/or the information about the first network device, the first network device to allocate a resource for D2D communication between the RUE and the UE to the RUE.

The first network device and the second network device may negotiate to reduce a possibility of resource conflict. For example, the second network device may determine the first network device, and notify, based on the information about the first network device sent by the UE, the first network device of information about a D2D resource used by the second network device for UE data transmission; and the first network device allocates, based on the foregoing information, a resource to the RUE for D2D communication.

In this embodiment of the present invention, step S520 may be replaced with:
A: The second network device and the first network device exchange the following information:
   the resource allocated by the second network device to the UE for D2D communication; and
   the resource allocated by the first network device to the RUE for D2D communication.
B: The second network device allocates, based on the resource allocated by the first network device to the RUE for D2D communication, a resource allocated to the UE for communication between the RUE and the UE, so as to evade the resource allocated by the first network device to the RUE for D2D communication.

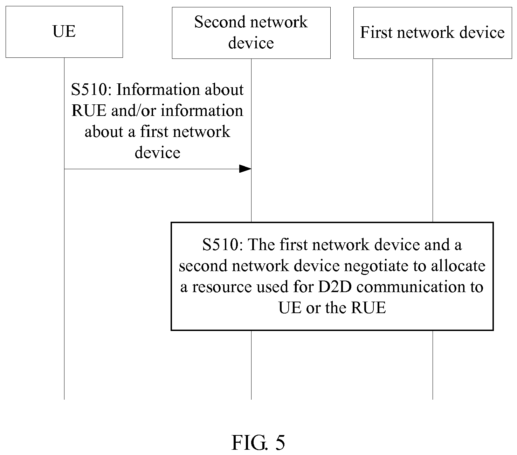

It should be noted that, a solution obtained through a combination of FIG. 3, FIG. 4, and FIG. 5 can also implement multi-connection communication. For example, the network device sends the link status and/or link requirement supported by the network device, and the RUE sends the link status and/or link requirement supported by the RUE, which may not be restricted by each other. For example, in the embodiment shown in FIG. 4, before the RUE sends the link status and/or link requirement supported by the RUE to the UE, the RUE may first receive the supported link status and/or link requirement sent by the network device. Only when the network device supports the link status and/or link requirement, the RUE determines a supporting status of the RUE and/or sends the link status and/or link requirement supported by the RUE to the UE. Certainly, the RUE may not determine the supporting status of the network device, and only sends a supporting status of the RUE to the UE. In this case, the UE needs to receive the supported link status and/or link requirement sent by the network device, and further determines whether the RUE and the network device corresponding to the RUE are capable of serving the UE. Alternatively, information sent by the RUE includes the link status and/or link requirement supported by the RUE and the network device (in this case, similar to the solution described in FIG. 3, the RUE may receive or proactively request the link status and/or link requirement supported by the network device). For another example, in the embodiment shown in FIG. 3, before sending a requirement and/or status of the UE to the RUE or the network device, the UE may further receive the supported link status and/or link requirement sent by the RUE or the network device. A specific receiving process may be similar to the process in the solution described in the embodiment shown in FIG. 4. The UE may determine, based on the supported link status and/or link requirement sent by the RUE or the network device, RUE or a network device that can serve the UE, and further establish a connection to the RUE or the network device. During connection establishment, the UE may only send one connection establishment request, to request the RUE or the network device to serve the UE, or the UE may add a requirement and/or a status of the UE to the connection establishment request. It should be known that, the technical solutions mentioned above are merely examples, and other solutions obtained through a combination of those in FIG. 3, FIG. 4, and FIG. 5 also fall within the protection scope of the present invention. Details are not described herein.

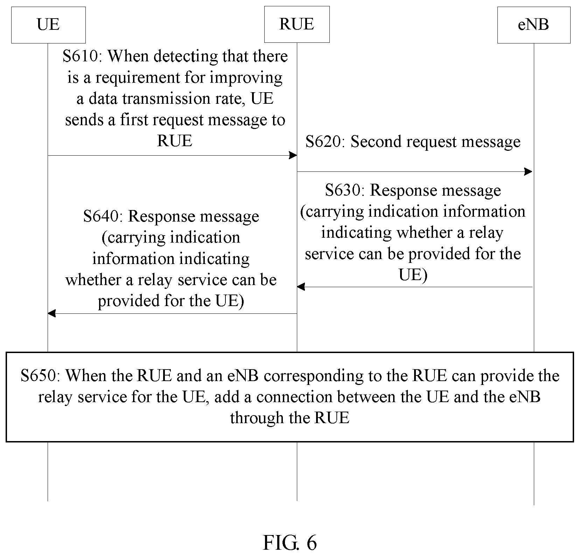

The following further describes the present invention with reference to FIG. 6 by using a specific example.

As shown in FIG. 6, the example may specifically include the following steps.

S610: When UE detects that there is a requirement for improving a data transmission rate, the UE sends a first request message to RUE, where the first request message is used to request the RUE to serve as a relay device to connect to a network device. The first request message may include a requirement of the UE that the RUE provides a relay service for the UE, and may further include a requirement that the UE requires RUE in a cell different from a cell serving the UE to provide a relay service for the UE.

S620: After receiving the first request message sent by the UE, the RUE sends a second request message to an eNB connected to the RUE, where the second request message is used to request the RUE to provide the relay service for the UE.

For example, the RUE may send the second request to the eNB, where the request is used to request the RUE to provide a relay service for UE in a neighboring cell. The RUE may add the second request message and indication information of the eNB to a preamble or a msg3 in a PRACH (Physical Random Access Channel, physical random access channel) random access procedure, or any message in an RRC connection establishment procedure, or a dedicated message after RRC connection establishment.

S630: A second eNB receives the second request message sent by the RUE, and returns a response message, where the response message carries indication information indicating whether a relay service can be provided for the UE.

S640: The RUE returns a response message to the UE, where the response message carries the indication information indicating whether a relay service can be provided for the UE.

S650: The UE receives the response message sent by the RUE, and when determining, based on the information carried in the response, that the RUE and the eNB corresponding to the RUE can provide the relay service for the UE, the UE adds a connection to the eNB through the RUE.

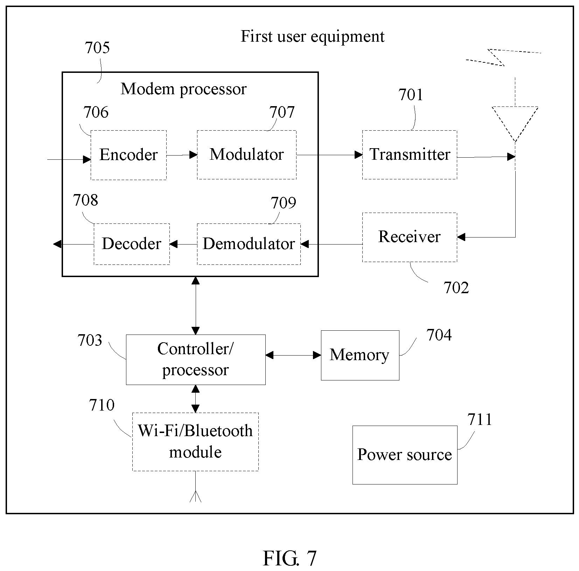

FIG. 7 is a simplified schematic diagram of a possible design structure of first user equipment in the foregoing embodiments. The first user equipment may include a transmitter 701, a receiver 702, a controller/processor 703, a memory 704, and a modem processor 705, and may further include a Wi-Fi and/or Bluetooth module 710, a power source 711, and the like. The transmitter 701 and the receiver 702 may be integrated as a transceiver.

The transmitter 701 adjusts (for example, digital-to-analog converts, filters, amplifies, and up-converts) an output sample and generates an uplink signal. The uplink signal is transmitted by an antenna to the second device (for example, the second user equipment or the first network device) in the foregoing embodiments. On a downlink, the antenna receives a downlink signal transmitted by the second device in the foregoing embodiments. The receiver 702 adjusts (for example, filters, amplifies, down-converts, and digitizes) the signal received from the antenna and provides an input sample. In the modem processor 705, an encoder 706 receives service data and a signaling message that are to be sent on an uplink, and processes (for example, formats, encodes, and interleaves) the service data and the signaling message. A modulator 707 further processes the encoded service data and signaling message (for example, performs symbol mapping and modulation) and provides an output sample. A demodulator 709 processes (for example, demodulates) the input sample and provides symbol estimation. A decoder 708 processes (for example, de-interleaves and decodes) the symbol estimation and sends the decoded data and signaling message to the first user equipment. The encoder 706, the modulator 707, the demodulator 709, and the decoder 708 may be implemented by the combined modem processor 705. These units perform processing according to a radio access technology (for example, an access technology used by an LTE system and other evolved systems) used by a radio access network.

The Wi-Fi and/or Bluetooth module 710 may include a receiver and a transmitter of a Wi-Fi and/or Bluetooth signal, and may perform data transmission with another device with a Wi-Fi and/or Bluetooth function such as the second user equipment by using the receiver and the transmitter.

In this embodiment of the present invention, if tasks of directly interacting with a network device are all executed by the second user equipment, the first user equipment may not include the transmitter 701, the receiver 702, the modem processor 705, and internal components of the modem processor 705.

The power source 711 (for example, a battery) is responsible for supplying power to each part. Preferably, the power source may be logically connected to the controller/processor 703 by using a power source management system, so as to implement functions such as charge management, discharge management, and power consumption management by using the power source management system.

The controller/processor 703 controls and manages an action of the first user equipment and is configured to perform processing implemented by the first user equipment in the foregoing embodiments. For example, the controller/processor 703 is configured to control the user equipment to execute a second task and/or other procedures of the technology described in the present invention. For example, the controller/processor 703 is further configured to execute processing procedures of the first user equipment in FIG. 3 to FIG. 6 and/or other procedures of the technology described in this application. The memory 704 is configured to store program code and data of the first user equipment.

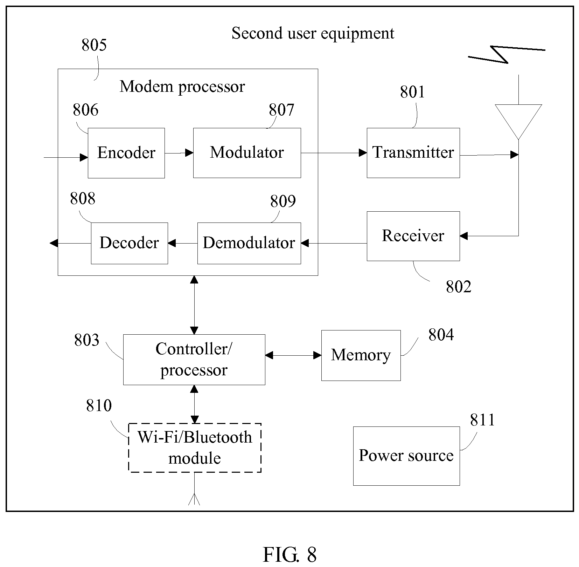

FIG. 8 is a simplified schematic diagram of a possible design structure of second user equipment in the foregoing embodiments. The second user equipment includes a transmitter 801, a receiver 802, a controller/processor 803, a memory 804, and a modem processor 805, and may further include a Wi-Fi and/or Bluetooth module 810, a power source 811, and the like.

The transmitter 801 adjusts (for example, digital-to-analog converts, filters, amplifies, and up-converts) an output sample and generates a link signal. The link signal is transmitted by an antenna to the network device or the first user equipment in the foregoing embodiments. The antenna receives a downlink signal transmitted by the network device in the foregoing embodiments. The receiver 802 adjusts (for example, filters, amplifies, down-converts, and digitizes) the signal received from the antenna and provides an input sample. In the modem processor 805, an encoder 806 receives service data and a signaling message that are to be sent on a link, and processes (for example, formats, encodes, and interleaves) the service data and the signaling message. A modulator 807 further processes the encoded service data and signaling message (for example, performs symbol mapping and modulation) and provides an output sample. A demodulator 1209 processes (for example, demodulates) the input sample and provides symbol estimation. A decoder 808 processes (for example, de-interleaves and decodes) the symbol estimation and sends the decoded data and signaling message to the second user equipment. The encoder 806, the modulator 807, the demodulator 809, and the decoder 808 may be implemented by the combined modem processor 805. These units perform processing according to a radio access technology (for example, an access technology used by an LTE system and other evolved systems) used by a radio access network.

The Wi-Fi and/or Bluetooth module 810 may include a receiver and a transmitter of a Wi-Fi and/or Bluetooth signal, and may perform data transmission with another device with a Wi-Fi and/or Bluetooth function such as the first user equipment by using the receiver and the transmitter.

The power source 811 (for example, a battery) is responsible for supplying power to each part. Preferably, the power source may be logically connected to the controller/processor 803 by using a power source management system, so as to implement functions such as charge management, discharge management, and power consumption management by using the power source management system.

The controller/processor 803 controls and manages an action of the second user equipment and is configured to perform processing implemented by the second user equipment in the foregoing embodiments. For example, the controller/processor 803 is configured to control the user equipment to execute a first task and/or other procedures of the technology described in the present invention. For example, the controller/processor 803 is further configured to execute processing procedures of the second user equipment in FIG. 3 to FIG. 6 and/or other procedures of the technology described in this application. The memory 804 is configured to store program code and data of the second user equipment.

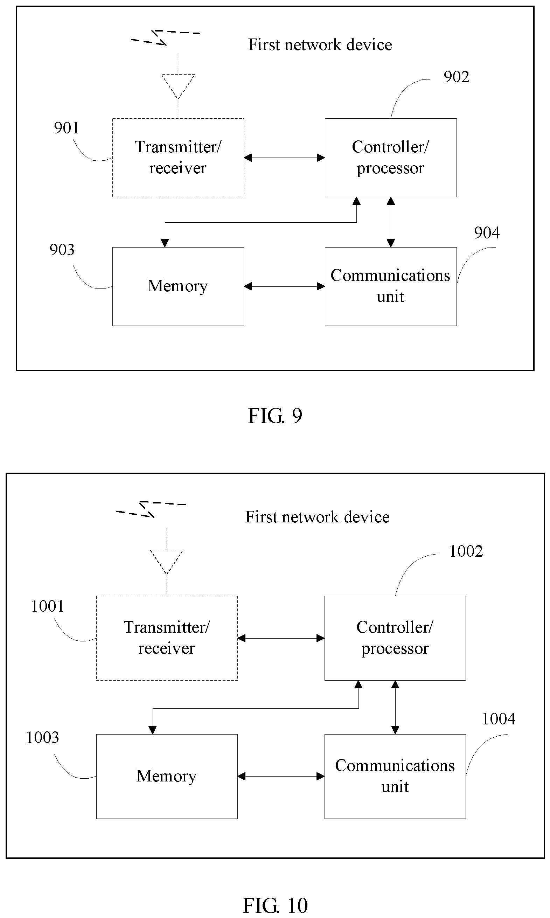

FIG. 9 is a possible schematic structural diagram of a first network device in the foregoing embodiments.

The first network device may be an access network device, and includes a transmitter (sender)/receiver 901, a controller/processor 902, a memory 903, and a communications unit 904. The transmitter/receiver 901 is configured to: support information transmission and reception between the access network device and the user equipment in the foregoing embodiments, and support radio communication between the user equipment and another user equipment. The controller/processor 902 executes various functions for communicating with the UE. On an uplink, an uplink signal from the UE is received by an antenna, demodulated by the receiver 901, and further processed by the controller/processor 902 to restore service data and signaling information sent by the UE. On a downlink, service data and a signaling message are processed by the controller/processor 902, and modulated by the transmitter 901 to generate a downlink signal, and the downlink signal is transmitted to the UE by the antenna. The controller/processor 902 further executes processing procedures of the access network device in FIG. 3 to FIG. 6 and/or other procedures of the technology described in this application. The memory 903 is configured to store program code and data of a base station. The communications unit 904 is configured to support the access network device in communicating with other network entities, for example, configured to support the access network device in communicating with other communications network entities shown in FIG. 2, such as the MME, the SGW, and/or the PGW on a core network EPC.

It can be understood that, FIG. 9 shows merely a simplified design of the access network device. In actual application, the base station may include any quantities of transmitters (senders), receivers, processors, controllers, memories, communications units, and the like. All access network devices that can implement the present invention fall within the protection scope of the present invention.

In addition, the first network device may be a core network device, and the core network device may not include the transmitter (sender)/receiver 901.

FIG. 10 is a possible schematic structural diagram of a second network device in the foregoing embodiments.

The second network device may be an access network device, and includes a transmitter (sender)/receiver 1001, a controller/processor 1002, a memory 1003, and a communications unit 1004. The transmitter/receiver 1001 is configured to: support information transmission and reception between the access network device and the user equipment in the foregoing embodiments, and support radio communication between the user equipment and another user equipment. The controller/processor 1002 executes various functions for communicating with the UE. On an uplink, an uplink signal from the UE is received by an antenna, demodulated by the receiver 1001, and further processed by the controller/processor 1002 to restore service data and signaling information sent by the UE. On a downlink, service data and a signaling message are processed by the controller/processor 1002, and modulated by the transmitter 1001 to generate a downlink signal, and the downlink signal is transmitted to the UE by the antenna. The controller/processor 1002 further executes processing procedures of the access network device in FIG. 3 to FIG. 6 and/or other procedures of the technology described in this application. The memory 1003 is configured to store program code and data of a base station. The communications unit 1004 is configured to support the access network device in communicating with other network entities, for example, configured to support the access network device in communicating with other communications network entities shown in FIG. 2, such as the MME, the SGW, and/or the PGW on a core network EPC. It can be understood that, FIG. 10 shows merely a simplified design of the access network device. In actual application, the base station may include any quantities of transmitters (senders), receivers, processors, controllers, memories, communications units, and the like. All access network devices that can implement the present invention fall within the protection scope of the present invention.

In addition, the second network device may be a core network device, and the core network device may not include the transmitter (sender)/receiver 1001.

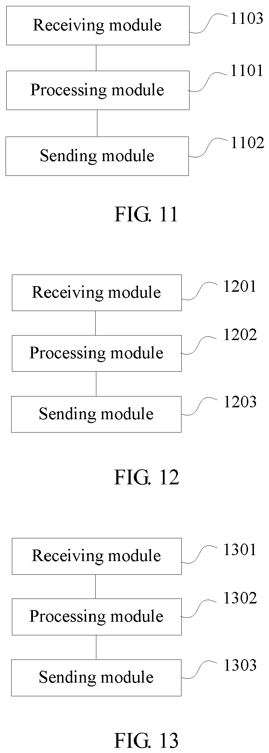

FIG. 11 shows a virtual communications apparatus according to an embodiment of the present invention. The apparatus specifically includes:
a processing module 1101, configured to determine first information, where the first information includes link status information of a first device and/or link requirement information of the first device; and a sending module 1102, configured to send a first message to a second device, where the first message carries the first information, and the first message is used to instruct the second device to establish a connection for the first device based on the first message.

Optionally, the first device has a connection to a second network device. The processing module 1101 is further configured to determine information about the second user equipment and information about a first network device. The sending module 1102 is further configured to send the information about the second user equipment and the information about the first network device to the second network device, so that the second network device instructs the first network device to allocate a resource for communication between the second user equipment and the first device to the second user equipment, or the second network device allocates a resource for communication between the second user equipment and the first device to the first device based on the information about the first network device and/or the information about the second user equipment.

Optionally, a receiving module 1103 is further configured to receive a second message sent by the second device, where the second message carries second information, the second information includes user equipment indication information supported by the second device, and the indication information includes a supported user equipment link status and/or link requirement, or an unsupported user equipment link status and/or link requirement.

Specifically, the processing module 1101 is further configured to: when the first device determines, based on the second message, that the second device is capable of serving first user equipment, control a transceiver module to send the first message to the second device.

FIG. 12 shows a virtual communications apparatus according to an embodiment of the present invention. The apparatus specifically includes:
a receiving module 1201, configured to receive a first message sent by a first device, where the first message carries first information, the first information includes link status information and/or link requirement information of the first device, and the first message is used to instruct second user equipment to establish a connection for the first device based on the first message; and a processing module 1202, configured to: when determining, based on the first information, that a capability of the second user equipment meets a requirement of the first device, establish the connection to serve the first device.

Optionally, the second device includes the second user equipment and a first network device. The receiving module 1201 is further configured to receive a second message sent by the first network device, where the second message carries second information, the second information includes user equipment indication information supported by the first network device, and the indication information includes a supported user equipment link status and/or link requirement, or an unsupported user equipment link status and/or link requirement. The processing module 1202 is further configured to: when the first network device is capable of serving the first device, and the capability of the second user equipment meets the requirement of the first device, establish the connection to serve the first device.

Optionally, the first device has a connection to a second network device. When the second device is the first network device, the receiving module 1201 is further configured to receive an instruction message sent by the second network device, where the instruction message is used to instruct the first network device to allocate a resource for communication between the second user equipment and the first device to the second user equipment. The processing module 1202 is further configured to allocate the resource for communication between the second user equipment and the first device to the second user equipment based on the instruction message.

Optionally, the first device has a connection to a second network device. When the second device is the first network device, the sending module 1203 is further configured to send, for the first network device to the second network device, information about a resource that is allocated by the first network device to the second user equipment, so that the second network device allocates a resource to the first device based on the information about the resource that is allocated by the first network device to the second user equipment.

FIG. 13 shows a virtual communications apparatus according to an embodiment of the present invention. The apparatus specifically includes:
a receiving module 1301, configured to receive a third message sent by at least one second user equipment or at least one first network device, where the third message carries second information, the second information includes user equipment indication information supported by the second device, and the indication information includes a supported user equipment link status and/or link requirement, or an unsupported user equipment link status and/or link requirement; a processing module 1302, configured to select one of the at least one second device based on the second information; and a sending module 1303, configured to send a connection establishment request message to the selected second device, where the connection establishment request message is used to instruct the selected second device to establish a connection for the first device to serve the first device.

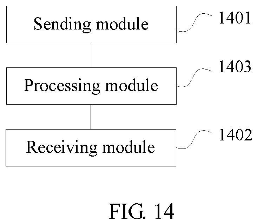

FIG. 14 shows a virtual communications apparatus according to an embodiment of the present invention. The apparatus specifically includes:
a sending module 1401, configured to send a third message to a first device, where the third message carries second information, the second information includes user equipment indication information supported by a second device, and the indication information includes a supported user equipment link status and/or link requirement, or an unsupported user equipment link status and/or link requirement; a receiving module 1402, configured to receive a connection establishment request message that is sent by the first device based on the third message, where the connection establishment request message is used to instruct the second device to establish a connection for the first device; and a processing module 1403, configured to establish the connection based on the connection establishment request message to serve the first device.

Optionally, the second device includes second user equipment and a first network device. The receiving module 1402 is further configured to receive, for the second user equipment, a fourth message sent by the first network device, where the fourth message carries user equipment indication information supported by the first network device.

Optionally, the second device includes second user equipment and a first network device. When the second device is the first network device, the sending module 1401 is further configured to send a third message to the second user equipment, where the third message carries second information, and the second information includes indication information indicating whether the first network device is capable of serving user equipment with a specific link status and/or a specific link requirement. A transceiver module is further configured to receive a connection establishment request message that is sent by the second user equipment based on the third message, where the connection establishment request message is used to instruct the first network device to establish a connection for the first device. The processing module is further configured to establish the connection based on the connection establishment request.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementations, the objective, technical solutions, and benefits of the present invention are further described in detail. It should be understood that the foregoing descriptions are merely specific implementations of the present invention, but are not intended to limit the protection scope of the present invention. Any modification, equivalent replacement, or improvement made without departing from the spirit and principle of the present invention should fall within the protection scope of the present invention.

## Claims

1. A communication method, comprising:
determining, by a first device, first information, wherein the first information comprises link status information of the first device and/or link requirement information of the first device, and the first device is first user equipment; and
sending, by the first user equipment, a first message to a second device, wherein the first message carries the first information, and the first message is used to instruct the second device to establish a connection for the first device based on the first information.

2. The method according to claim 1, wherein the link status information comprises any one or more of the following:
a quantity of established communication links of the first device;
quality of service of an established communication link of the first device; and
a type of an established communication link of the first device.

3. The method according to claim 1 or 2, wherein the second device comprises either or both of the following:
second user equipment and a first network device.

4. The method according to claim 3, wherein the link requirement information comprises any one or more of the following:
a requirement of the first device for a network device that is required to serve the first device;
a requirement of the first device for the second user equipment that is required to serve the first device;
a requirement of the first device for a cell serving the second user equipment that is required to serve the first device;
a requirement of the first device on quality of communication between the first device and a network device that is required to serve the first device;
a requirement of the first device on quality of communication between the first device and the second user equipment that is required to serve the first device; and
a requirement of the first device on quality of communication between the first device and a cell serving the second user equipment that is required to serve the first device.

5. The method according to claim 3 or 4, wherein that the first message is used to instruct the second device to establish a connection for the first user equipment based on the first message comprises:
the first message is used to instruct the second user equipment and/or the first network device to establish a connection between the second user equipment and the first user equipment and a connection between the second user equipment and the first network device for the first user equipment based on the first message; or
when the second user equipment has a connection between the second user equipment and the first network device, the first message is used to instruct the second user equipment and/or the first network device to establish a connection between the second user equipment and the first user equipment for the first user equipment based on the first message; or
when the first user equipment has a connection between the first user equipment and the second user equipment, the first message is used to instruct the second user equipment and/or the first network device to establish a connection between the second user equipment and the first network device for the first user equipment based on the first message; or
the first message is used to instruct the second user equipment and/or the first network device to establish a connection between the second user equipment and the first user equipment for the first user equipment based on the first message.

6. The method according to claim 5, wherein the first device has a connection to a second network device, and the method further comprises:
determining, by the first device, information about the second user equipment and information about the first network device; and
sending, by the first device, the information about the second user equipment and the information about the first network device to the second network device, so that the second network device instructs the first network device to allocate a resource for communication between the second user equipment and the first device to the second user equipment, or the second network device allocates a resource for communication between the second user equipment and the first device to the first device based on the information about the first network device and/or the information about the second user equipment.

7. The method according to claim 6, wherein the second network device and the first network device exchange the resource allocated by the second network device to the first device and the resource allocated by the first network device to the second user equipment.

8. The method according to claim 1, wherein before the sending, by the first device, a first message to a second device, the method further comprises:
receiving, by the first device, a second message sent by the second device, wherein the second message carries second information, the second information comprises user equipment indication information supported by the second device, and the indication information comprises a supported user equipment link status and/or link requirement, or an unsupported user equipment link status and/or link requirement.

9. The method according to claim 8, wherein the sending, by the first device, a first message to a second device is specifically:
when the first device determines, based on the second message, that the second device is capable of serving the first user equipment, sending, by the first device, the first message to the second device.

10. A communication method, comprising:
receiving, by a second device, a first message sent by a first device, wherein the first message carries first information, the first information comprises link status information and/or link requirement information of the first device, and the first message is used to instruct the second user equipment to establish a connection for the first device based on the first message; and
when the second device determines, based on the first information, that a capability of the second device meets a requirement of the first device, establishing, by the second device, a connection to serve the first device.

11. The method according to claim 10, wherein the second device comprises the second user equipment and a first network device, and the method further comprises:
receiving, by the second user equipment, a second message sent by the first network device, wherein the second message carries second information, the second information comprises user equipment indication information supported by the first network device, and the indication information comprises a supported user equipment link status and/or link requirement, or an unsupported user equipment link status and/or link requirement; and
when the first network device is capable of serving the first device, and a capability of the second user equipment meets the requirement of the first device, establishing, by the second user equipment, the connection to serve the first device.

12. The method according to claim 10 or 11, wherein the first device has a connection to a second network device, and the method further comprises:
receiving, by the first network device, an instruction message sent by the second network device, wherein the instruction message is used to instruct the first network device to allocate a resource for communication between the second user equipment and the first device to the second user equipment; and
allocating, by the first network device, the resource for communication between the second user equipment and the first device to the second user equipment based on the instruction message.

13. The method according to claim 10 or 11, wherein the first device has a connection to a second network device, and the method further comprises:
sending, by the first network device to the second network device, information about a resource allocated by the first network device to the second user equipment, so that the second network device allocates a resource to the first device based on the information about the resource allocated by the first network device to the second user equipment.

14. A communication method, comprising:
receiving, by a first device, a third message sent by at least one second device, wherein the third message carries second information, the second information comprises user equipment indication information supported by the second device, and the indication information comprises a supported user equipment link status and/or link requirement, or an unsupported user equipment link status and/or link requirement;
selecting, by the first device, one of the at least one second device based on the second information; and
sending, by the first device, a connection establishment request message to the selected second device, wherein the connection establishment request message is used to instruct the selected second device to establish a connection for the first device to serve the first device.

15. The method according to claim 14, wherein the second device comprises either or both of the following:
second user equipment and a first network device.

16. The method according to claim 15, wherein the indication information comprises any one or more of the following:
a requirement on a quantity of established communication links of the first device;
a requirement on quality of an established communication link of the first device;
a requirement on a type of an established communication link of the first device; and an achievable requirement of the first device for a network device that is required to serve the first device;
an achievable requirement of the first device for the second user equipment that is required to serve the first device;
an achievable requirement of the first device for a cell serving the second user equipment that is required to serve the first device;
an achievable requirement of the first device on quality of communication between the first device and a network device that is required to serve the first device;
an achievable requirement of the first device on quality of communication between the first device and the second user equipment that is required to serve the first device; and
an achievable requirement of the first device on quality of communication between the first device and a cell serving the second user equipment that is required to serve the first device.

17. A communication method, comprising:
sending, by a second device, a third message to a first device, wherein the third message carries second information, the second information comprises user equipment indication information supported by the second device, and the indication information comprises a supported user equipment link status and/or link requirement, or an unsupported user equipment link status and/or link requirement;
receiving, by the second device, a connection establishment request message that is sent by the first device based on the third message, wherein the connection establishment request message is used to instruct the second device to establish a connection for the first device; and
establishing, by the second device, the connection based on the connection establishment request message to serve the first device.

18. The method according to claim 17, wherein the second device comprises second user equipment and a first network device, and the method further comprises:
receiving, by the second user equipment, a fourth message sent by the first network device, wherein the fourth message carries user equipment indication information supported by the first network device.

19. The method according to claim 17, wherein the second device comprises second user equipment and a first network device, and the method further comprises: sending, by the first network device, a third message to the second user equipment, wherein the third message carries second information, and the second information comprises indication information indicating whether the first network device is capable of serving user equipment with a specific link status and/or a specific link requirement;
receiving, by the first network device, a connection establishment request message that is sent by the second user equipment based on the third message, wherein the connection establishment request message is used to instruct the first network device to establish a connection for the first device; and
establishing, by the first network device, the connection based on the connection establishment request.

20. A communications device, wherein the device is user equipment and comprises:
a processor, configured to determine first information, wherein the first information comprises link status information of a first device and/or link requirement information of the first device; and
a transceiver, configured to send a first message to a second device, wherein the first message carries the first information, and the first message is used to instruct the second device to establish a connection for the first device based on the first message.

21. The device according to claim 20, wherein the link status information comprises any one or more of the following:
a quantity of established communication links of the first device;
quality of service of an established communication link of the first device; and
a type of an established communication link of the first device.

22. The device according to claim 20 or 21, wherein the second device comprises either or both of the following:
second user equipment and a first network device.

23. The device according to claim 22, wherein the link requirement information comprises any one or more of the following:
a requirement of the first device for a network device that is required to serve the first device;
a requirement of the first device for the second user equipment that is required to serve the first device;
a requirement of the first device for a cell serving the second user equipment that is required to serve the first device;
a requirement of the first device on quality of communication between the first device and a network device that is required to serve the first device;
a requirement of the first device on quality of communication between the first device and the second user equipment that is required to serve the first device; and
a requirement of the first device on quality of communication between the first device and a cell serving the second user equipment that is required to serve the first device.

24. The device according to claim 22 or 23, wherein that the first message is used to instruct the second device to establish a connection for the first user equipment based on the first message comprises:
the first message is used to instruct the second user equipment and/or the first network device to establish a connection between the second user equipment and the first user equipment and a connection between the second user equipment and the first network device for the first user equipment based on the first message; or
when the second user equipment has a connection between the second user equipment and the first network device, the first message is used to instruct the second user equipment and/or the first network device to establish a connection between the second user equipment and the first user equipment for the first user equipment based on the first message; or
when the first user equipment has a connection between the first user equipment and the second user equipment, the first message is used to instruct the second user equipment and/or the first network device to establish a connection between the second user equipment and the first network device for the first user equipment based on the first message; or
the first message is used to instruct the second user equipment and/or the first network device to establish a connection between the second user equipment and the first user equipment for the first user equipment based on the first message.

25. The device according to claim 24, wherein the first device has a connection to a second network device, and the processor is further configured to determine information about the second user equipment and information about the first network device; and
the transceiver is further configured to send the information about the second user equipment and the information about the first network device to the second network device, so that the second network device instructs the first network device to allocate a resource for communication between the second user equipment and the first device to the second user equipment, or the second network device allocates a resource for communication between the second user equipment and the first device to the first device based on the information about the first network device and/or the information about the second user equipment.

26. The device according to claim 20, wherein the transceiver is further configured to receive a second message sent by the second device, wherein the second message carries second information, the second information comprises user equipment indication information supported by the second device, and the indication information comprises a supported user equipment link status and/or link requirement, or an unsupported user equipment link status and/or link requirement.

27. The device according to claim 26, wherein the processor is further configured to: when the first device determines, based on the second message, that the second device is capable of serving the first user equipment, control the transceiver to send the first message to the second device.

28. A communications device, comprising:
a transceiver, configured to receive a first message sent by a first device, wherein the first message carries first information, the first information comprises link status information and/or link requirement information of the first device, and the first message is used to instruct the second user equipment to establish a connection for the first device based on the first message; and
a processor, configured to: when determining, based on the first information, that a capability of the second user equipment meets a requirement of the first device, establish a connection to serve the first device.

29. The device according to claim 28, wherein the second device comprises the second user equipment and a first network device, and the transceiver is further configured to receive a second message sent by the first network device, wherein the second message carries second information, the second information comprises user equipment indication information supported by the first network device, and the indication information comprises a supported user equipment link status and/or link requirement, or an unsupported user equipment link status and/or link requirement; and
the processor is further configured to: when the first network device is capable of serving the first device, and the capability of the second user equipment meets the requirement of the first device, establish the connection to serve the first device.

30. The device according to claim 28 or 29, wherein the first device has a connection to a second network device, and when the second device is the first network device, the transceiver is further configured to receive an instruction message sent by the second network device, and the instruction message is used to instruct the first network device to allocate a resource for communication between the second user equipment and the first device to the second user equipment; and
the processor is further configured to allocate the resource for communication between the second user equipment and the first device to the second user equipment based on the instruction message.

31. The device according to claim 28 or 29, wherein the first device has a connection to a second network device, and when the second device is the first network device, the transceiver is further configured to send, for the first network device to the second network device, information about a resource that is allocated by the first network device to the second user equipment, so that the second network device allocates a resource to the first device based on the information about the resource that is allocated by the first network device to the second user equipment.

32. A communications device, wherein the device is user equipment and comprises:
a transceiver, configured to receive a third message sent by at least one second user equipment or at least one first network device, wherein the third message carries second information, the second information comprises user equipment indication information supported by the second device, and the indication information comprises a supported user equipment link status and/or link requirement, or an unsupported user equipment link status and/or link requirement; and
a processor, configured to select one of the at least one second device based on the second information; wherein
the transceiver is further configured to send a connection establishment request message to the selected second device, wherein the connection establishment request message is used to instruct the selected second device to establish a connection for the first device to serve the first device.

33. The device according to claim 32, wherein the second device comprises either or both of the following:
the second user equipment and the first network device.

34. The method according to claim 33, wherein the indication information comprises any one or more of the following:
a requirement on a quantity of established communication links of the first device;
a requirement on quality of an established communication link of the first device;
a requirement on a type of an established communication link of the first device; and an achievable requirement of the first device for a network device that is required to serve the first device;
an achievable requirement of the first device for the second user equipment that is required to serve the first device;
an achievable requirement of the first device for a cell serving the second user equipment that is required to serve the first device;
an achievable requirement of the first device on quality of communication between the first device and a network device that is required to serve the first device;
an achievable requirement of the first device on quality of communication between the first device and the second user equipment that is required to serve the first device; and
an achievable requirement of the first device on quality of communication between the first device and a cell serving the second user equipment that is required to serve the first device.

35. A communications device, comprising:
a transceiver, configured to send a third message to a first device, wherein the third message carries second information, the second information comprises user equipment indication information supported by the second device, and the indication information comprises a supported user equipment link status and/or link requirement, or an unsupported user equipment link status and/or link requirement, wherein
the transceiver is further configured to receive a connection establishment request message that is sent by the first device based on the third message, wherein the connection establishment request message is used to instruct the second device to establish a connection for the first device; and
a processor, configured to establish the connection based on the connection establishment request message to serve the first device.

36. The device according to claim 35, wherein the second device comprises second user equipment and a first network device, the transceiver is further configured to receive, for the second user equipment, a fourth message sent by the first network device, wherein the fourth message carries user equipment indication information supported by the first network device.

37. The device according to claim 35, wherein the second device comprises second user equipment and a first network device, and when the second device is the first network device, the transceiver is further configured to send a third message to the second user equipment, wherein the third message carries second information, and the second information comprises indication information indicating whether the first network device is capable of serving user equipment with a specific link status and/or a specific link requirement;
the transceiver is further configured to receive a connection establishment request message that is sent by the second user equipment based on the third message, wherein the connection establishment request message is used to instruct the first network device to establish a connection for the first device; and
the processor is further configured to establish the connection based on the connection establishment request.
